Europäisches Patentamt

European Patent Office

Office européen des brevets

(19)

(11) Publication number: **0 199 735 B1**

(12) **EUROPEAN PATENT SPECIFICATION**
**published in accordance with Art.**
**158(3) EPC**

(45) Date of publication of patent specification: **08.05.91**

(51) Int. Cl.⁵: **A61K 31/195**, A01N 37/44, C11D 3/26

(21) Application number: **85903929.9**

(22) Date of filing: **25.07.85**

(86) International application number:
**PCT/US85/01414**

(87) International publication number:
**WO 86/02549 (09.05.86 86/10)**

The file contains technical information submitted after the application was filed and not included in this specification

(54) **DISINFECTANT AND CLEANSING COMPOSITIONS.**

(30) Priority: **01.11.84 US 667313**

(43) Date of publication of application:
**05.11.86 Bulletin 86/45**

(45) Publication of the grant of the patent:
**08.05.91 Bulletin 91/19**

(84) Designated Contracting States:
**AT BE CH DE FR GB IT LI LU NL SE**

(56) References cited:
**WO-A-81/00188**    **FR-A- 2 123 332**
**US-A- 3 492 238**    **US-A- 3 920 020**
**US-A-30 759 24**    **US-A-31 510 84**
**US-A-39 358 62**    **US-A-41 073 31**

**CHEMICAL ABSTRACTS, vol. 88, no. 22, 29th May 1978, page 124, abstract 154792p, Columbus, Ohio, US**

(73) Proprietor: **FARRISH, Bryan Harold (legal representative of FARRISH, James H. (deceased))**
**Route 1 Box 25**
**Santa Rosa Beach, FL 32459(US)**

(72) Inventor: **FARRISH, James H.**

**deceased(US)**

(74) Representative: **Vossius & Partner**
**Siebertstrasse 4 P.O. Box 86 07 67**
**W-8000 München 86(DE)**

CHEMICAL ABSTRACTS, vol. 94, no. 26, 29th June 1981, page 109, abstract 210634b, Columbus, Ohio, US

CHEMICAL ABSTRACTS, vol. 95, no. 10, 7th September 1981, page 62, abstract 82356u, Columbus, Ohio, US

McMutcheon's, Detergents and Emulsifiers, 1967 Annual, pages 39, 54, 79, 96, 150 and 270

## Description

The present invention relates to a disinfectant and cleansing composition. More particularly, the present invention relates to a composition which is effective for disinfecting (i.e., destroying harmful microorganisms) and cleansing, for example, animate objects and surfaces. In one preferred embodiment, the composition of the present invention is useful in disinfecting and cleansing animal tissue such as the human skin while, at the same time, significantly reducing pain and itching without causing irritation or other harmful effects on the skin.

Alkali metal salts of hydroxy alkyl amine-substituted carboxylic acids are known as chelating agents useful, for example, for the chelating of iron in metal cleaning. However, chelating agents in general have been believed to be ineffective antibacterial agents. Moreover, due to the high pH of commercially available solutions of the alkali metal salts of hydroxy alkyl amine-substituted carboxylic acids, generally in the neighbourhood of 13-14, it has been believed that they would be harmful and even destructive to animal tissue, e.g., human skin.

Conventional anionic surface active agents are known as excellent cleansing agents. However, the anionic surface active agents are also known as tending to irritate animal tissue, e.g., the human skin, by interaction with the protein of the tissue. Moreover, the conventional anionic surface active agents have at most only a very slight bactericidal action and have been taught as destroying the bactericidal action of known bactericides such as the cationic surface active agents.

FR-A-21 23 332 discloses detergent compositions containing as primary active ingredient an alkali metal salt of mono or bis(hydroxyalkyl) amine substituted carboxylic acids and a surface active agent in a proportion range of from 1:2 up to 10:1.

Dishwashing detergents containing N,N-bis-(hydroxyalkyl)-β-alanineMa salt and alkyl ether sulfates, soaps, alkyl-benzenesulfonates, paraffinsulfonates, olefinsulfonates, poly(oxyethylene) alkyl ether sulfonates, or higher alc. sulfates are disclosed in JP-A-77/154811.

JP-A-80/151098 discloses dishwashing detergents containing metal salts of N-β-hydroxyalkyl-N-hydroxyethyl-β-alanine and anionic surfactants.

JP-A-81/11998 discloses color-safe peroxide bleaches containing N-(2-hydroxyethyl)aminoacetic acid (I), its Na salt, or Mg N,N-bis(2-hydroxyethyl)-aminoacetate.

It is the object of the present invention to provide a disinfectant and cleansing composition which is effective for destroying harmful microorganisms on, for example, animate objects and surfaces without causing irritation or other harmful effects and also effective in reducing pain and itching.

Surprisingly, it has now been found according to the present invention that a composition containing,, as primary active ingredient sodium dihydroxyethyl glycinate is effective in fulfilling the above objects. In another preferred embodiment, it has been found that a combination of a major proportion of the sodium dihydroxyethyl glycinate with a minor proportion of an anionic surface active agent produces a disinfectant and cleansing composition which may exhibit a synergistic effect in fulfilling the above objects. The preferred composition of this embodiment is characterized in that it contains as the active components said sodium dihydroxyethyl glycinate and said anionic surface active agent.

It is important to expose the sodium dihydroxyethyl glycinate to the atmosphere at ambient or slightly elevated temperatures to allow volatilization of any unreacted starting materials, e.g., amines.

The subject matter of the invention therefore is a disinfectant and cleansing composition consisting essentially of an aqueous solution comprising sodium dihydroxyethyl glycinate in an amount of 0.001 to 50% by weight, wherein said compound has been pretreated to remove unreacted amines by volatilization, and, preferably, wherein the aqueous solution has a pH of 8 to 14.

A particularly suitable anionic surface active agent is sodium diisobutyl naphthalene sulfonate and others which may be used include sulfated and sulfonated aliphatic and aromatic hydrocarbons; and sulfated and sulfonated esters, amides and alcohols.

Both of the sodium dihydroxyethyl glycinate and the anionic surface active agents are known compounds and may be produced in manners known to the art.

The composition of the present invention contains from 0.001 to 50% by weight of the active ingredient, i.e. the sodium dihydroxyethyl glycinate, which is available e.g. as Hampshire DEG (W. R. Grace & Co.) commercially in solutions containing 46-48% of the salt. For certain purposes, the commercial product may be further concentrated, e.g., by removal of small portions of the solvent by evaporation or other conventional methods, to above about 47% by weight, for example, for up to about 50% by weight or slightly higher of the active ingredient, although this is not ordinarily necessary. The composition may also be diluted by addition of solvent or other inactive carrier. For most external applications, the composition will contain at least about 4-5% by weight of the active ingredient.

For the compositions of the present invention also containing the anionic surfactant, the proportions of active ingredients correspond to from 1 to 9 parts, preferably about 9 parts, by tight of a 40% by weight solution of the anionic surface active agent combined with each part of a 46-48% by weight solution of the sodium glycinate component. It is to be understood that these proportions may be accomplished in a variety of manners known to the art. Thus, the strengths of the solutions may be varied or the anionic surface active agent may be added in the solid form to the solution of the sodium glycinate component, so long as the final proportions are within the above limitations. Increasing the proportion of anionic surface active agent above about 9 parts by weight may undesirably result in overdrying of animal tissue and perhaps a tendency to irritation.

The solutions of the active components are aqueous solutions, most preferably solutions in deionized water. Other solutions which may be used include those in distilled water.

As discussed hereinbefore, the pH of the alkali metal component in, for example, a 46%-48% by weight solution is about 13 to 14. Normally, compositions having a pH above about 8 tend to be destructive or otherwise detrimental to animal tissue and this effect normally increases with an increase in the pH. It has been unexpectedly and surprisingly found, however, that the sodium dihydroxyethyl glycinate used in the composition of the present invention is not harmful to animal tissue. While the addition of the anionic surface active agent in the compositions containing same does not significantly reduce the pH of the combination, surprisingly the composition is even less detrimental to animal tissue.

The composition of the present invention is a most effective disinfectant. That is, it will eliminate or at least significantly reduce and control harmful microorganisms including bacteria, fungi, etc. The high pH also is effective in reducing pain, e.g., from burns, perhaps by the production of heat upon contact with the animal tissue. The composition of the present invention is absorbed rapidly by and into animal tissue such as the human skin. It has been found that the composition is also effective for application to the teats of milk cows to cleanse and disinfect the teats while preventing irritation thereof.

It is believed that the composition of the present invention which contains the anionic surfactant may exhibit a two-way synergistic safety characteristic. That is, the anionic surface active agent operates synergistically to significantly reduce or eliminate any possible irritating effects resulting from the high pH of the sodium dihydroxyethyl glycinate and said sodium dihydroxyethyl glycinate in turn, may operate synergistically to significantly reduce or eliminate any harmful effect of the anionic surface agent such as its known tendency to irritate animal tissue such as the human skin. Most significantly, the two components interact synergistically to provide an effective disinfectant composition useful to eliminating all harmful microorganisms from, for example, animate objects and surfaces.

For purposes of the present invention, the term "animate" is to be understood in its broad sense, i.e., referring to objects and surfaces possessing, or having possessed, life. It is believed, however, that the composition of the present invention may also find use in disinfecting objects and surfaces such as the shells of eggs and as bactericides and/or insecticides.

If desired, the normally high pH of the composition can be reduced by addition of a non-toxic acid, e.g., acetic acid or citric acid. The pH of the composition can be lowered to about 4 with citric acid and to about 3 with acetic acid. It has been surprisingly found that even with lowering of the pH, the composition is still effective although the effect may be retarded somewhat. For example, at a pH of 8, the composition is still an effective disinfectant and still effectively reduces pain and itching.

The composition of the present invention may be diluted with a carrier, e.g., deionized water, for various purposes. For example, the composition of the present invention containing from 0.001 to 5 parts by weight of the active ingredient or ingredients may be ingested orally or given intraperitoneally to animals. The composition may also be concentrated for other purposes, e.g., by volatilization of a portion of the carrier.

Other ingredients may be added to the composition as desired including dyes, pigments, perfumes, etc. up to a total of about 10% by weight. Also, for application to animal tissue such as the human skin, the composition may contain constituents normally present in preparations for this purpose such as emulsifiers, fatty substances, plant extracts, preservatives and solvents in the customary amounts. Thus, the compositions of the present invention may contain any such constituents which are at least miscible with the carrier or solvent, will not be irritating to animal tissue either alone or in combination with the active ingredient or ingredients, and will not materially affect the pH of the composition.

The present invention is illustrated by the following examples wherein all parts and percentages are by weight unless otherwise defined.

## EXAMPLE 1

A composition was prepared containing 47% by weight of sodium dihydroxy ethyl glycinate in water.

EXAMPLE 2

The composition of Example 1 was diluted with 30 parts by weight of water.

EXAMPLE 3

9 Parts of a 46%-48% by weight aqueous solution of sodium dihydroxy ethyl glycinate was admixed with stirring with 1 part of a 40% by weight aqueous solution of sodium diisobutyl naphthalene sulfonate.

EXAMPLE 4

The composition prepared according to Example 3 was diluted with 20 parts by weight of deionized water.

EXAMPLE 5

The composition prepared according to Example 3 was concentrated by heating to evaporate the aqueous carrier until the solution contained about 50 parts by weight of active ingredients.

## Claims

1. A disinfectant and cleansing composition consisting essentially of an aqueous solution comprising sodium dihydroxyethyl glycinate in an amount of 0.001 to 50% by weight; wherein said compound has been pretreated to remove unreacted amines by volatilization.

2. The composition as claimed in claim 1, wherein the composition contains at least 4 to 5% by weight of the sodium dihydroxyethyl glycinate.

3. The composition as claimed in claim 1, wherein the aqueous solution has a pH of at least 8 to 14.

4. The composition as claimed in claim 1, wherein the aqueous solution contains 0.001 to 5 parts by weight of the sodium dihydroxyethyl glycinate.

5. The composition as claimed in any one of claims 1 to 4, wherein the composition is combined with from 1 to 9 parts by weight of a 40% by weight solution of an anionic surface active agent for each part of a 46% - 48% by weight solution of said sodium dihydroxyethyl glycinate.

6. The composition as claimed in claim 5, wherein the surface active agent is sodium diisobutyl naphthalene sulfonate.

## Revendications

1. Composition désinfectante et détersive constituée essentiellement par une solution aqueuse comprenant du dihydroxyéthylglycinate de sodium à raison de 0,001 à 50 % en poids, dans laquelle ledit composé a subi un traitement préalable pour volatiliser les amines qui n'ont pas réagi.

2. Composition selon la revendication 1, dans laquelle la composition contient au minimum 4 à 5 % en poids de dihydroxyéthylglycinate de sodium.

3. Composition selon la revendication 1, dans laquelle la solution aqueuse a un pH d'au moins 8 à 14.

4. Composition selon la revendication 1, dans laquelle la solution aqueuse contient 0,001 à 5 parties en poids de dihydroxyéthylglycinate de sodium.

5. Composition selon l'une quelconque des revendications 1 à 4, dans laquelle la composition est associée à 1 à 9 parties en poids d'une solution à 40 % en poids d'un agent tensioactif anionique pour chaque partie d'une solution à 46-48 % en poids du dihydroxyéthylglycinate de sodium.

6. Composition selon la revendication 5, dans laquelle l'agent tensioactif est du diisobutylnaphtalènesulfonate de sodium.

## Ansprüche

1. Desinfektions- und Reinigungsmittel, im wesentlichen bestehend aus einer wäßrigen, Natriumdihydroxyethylglycinat in einer Menge von 0,001 bis 50 Gew.-% enthaltenden Lösung, wobei die Verbindung zur Entfernung nicht umgesetzter Amine durch Verdampfung vorbehandelt worden ist.

2. Mittel nach Anspruch 1, wobei das Mittel mindestens 4 bis 5 Gew.-% Natriumdihydroxyethylglycinat enthält.

3. Mittel nach Anspruch 1, wobei die wäßrige Lösung einen pH-Wert von mindestens 8 bis 14 hat.

4. Mittel nach Anspruch 1, wobei die wäßrige Lösung 0,001 bis 5 Gew.-Teile Natriumdihydroxyethylglycinat enthält.

5. Mittel nach einem der Ansprüche 1 bis 4, wobei das Mittel mit 1 bis 9 Gew.-Teilen einer 40 Gew.-%igen Lösung eines anionischen oberflächenaktiven Mittels pro einem Teil einer 46 bis 48 Gew.-%igen Lösung des Natriumdihydroxyethylglycinats kombiniert wird.

6. Mittel nach Anspruch 5, wobei das oberflächenaktive Mittel Natriumdiisobutylnaphthalinsulfonat ist.